# EUROPEAN PATENT APPLICATION

(11) **EP 1 739 404 A1**
(43) Date of publication of application: **03.01.2007**
(21) Application number: 05727720.4
(22) Date of filing: 29.03.2005
(51) Int. Cl.: G01N 13/00, C12M 1/00

(54) **NANOGAP SERIES SUBSTANCE CAPTURING, DETECTING AND IDENTIFYING METHOD AND DEVICE**

(30) Priority: 30.03.2004 JP 2004100735
(71) Applicant: Japan Science and Technology Agency, Kawaguchi-shi, Saitama 332-0012 (JP)
(72) Inventor: KAWAKATSU, Hideki, 1580086 (JP)
(74) Representative: Hoarton, Lloyd Douglas Charles
(86) International application number: PCT/JP2005/005796
(87) International publication number: WO 2005/095922

(57) **Abstract**

A nanogap array method and device are provided which can trap, detect, and identify a substance with high sensitivity even if the substance to be detected is molecules contained in liquid. This device includes a cantilever array (3) including cantilevers (4) each having a probe (5), and a substrate (1) disposed below the cantilever array (3) and having modified surfaced (2) arranged so as to correspond to the probe (5) of each cantilever (4). Nanometer-sized gaps are defined between the modified surfaces (2) of the substrate (1) and tips of the probes (5) of the cantilevers (4) to trap, detect, and identify at least one unknown substance (6) set on the modified surfaces (2) .

## Description

### Technical Field

The present invention relates to nanogap array methods and devices for trapping, detecting, and identifying a substance.

### Background Art

The following two methods, which utilize a cantilever array, are known for detecting substances. The methods are performed as follows.
(1) A substance that reacts with or adsorbs a sample substance is applied to cantilevers in advance so as to optically or electrically detect deflection of the cantilevers after introduction of the sample substance (see Non-Patent Document 1 below).
(2) Mass change of cantilevers due to trapping substance or damping change of cantilevers after oscillation of the cantilevers are detected as change in vibrational frequency or change in oscillation amplitude (see Non-Patent Document 2 below).
   Without use of cantilevers, there is such method of measuring single molecules as follows.
(3) A molecule is trapped between two electrodes arranged on a flat substrate with an interval of several nanometers to perform electrical measurements.
   The present inventor et al. have proposed the following nanometric mechanical oscillators and measurement apparatuses using the oscillators.
(4) A nanometeric mechanical oscillator having high stability, high sensitivity, and a dramatic detection resolution capable of detecting nanometric changes in force and mass and a measuring apparatus using the oscillator (see Patent Document 1 below).
(5) A method and apparatus for mapping physical property distribution of a sample by use of cantilevers (see Patent Document 2 below).
(6) Cantilevers for detecting a sample surface and various things using the cantilevers such as a scanning probe microscope, a homodyne laser interferometer, and a laser Doppler interferometer having a sample exciting function (see Patent Document 3 below).
(7) Examples of optical tweezers are disclosed in Non-Patent Documents 3 to 5 below.
   Patent Document 1: Japanese Unexamined Patent Application Publication No. 2001-0091441
   Patent Document 2: Japanese Unexamined Patent Application Publication No. 2001-0289768
   Patent Document 3: Japanese Unexamined Patent Application Publication No. 2003-0114182
   Non-Patent Document 1: M. K. Baller, H. P. Lang, J. Fritz, Ch. Gerber, J. K. Gimzewski, U. Drechsler, H. Rothuizen, M. Despont, P. Vettiger, F. M. Battiston, J. P. Ramseyer, P. Fornaro, E. Meyer, and H. -J. Guentherodt, "A Cantilever Array-Based Artificial Nose," Ultramicroscopy, (2000) 1 Non-Patent Document 2: B. Ilic, D. Czaplewski, M. Zalalutdinov, H. G. Craighead, P. Neuzil, C. Campagnolo, and C. Batt, "Single Cell Detection with Micromechanical Oscillators," J. Vac. Sci. Technol. B19, (2001) 2825 Non-Patent Document 3: R. Gussgard and T. Lindmo, Journal Optics Society of American, Vol. 9, No. 10
   Non-Patent Document 4: Tachibana and Ukita, "Manipulation of Microparticles with Upward and Downward Incident Light," Kogaku, Vol, 27, No. 9, pp. 524-529, 1998
   Non-Patent Document 5: H. Ukita and T. Saitoh, "Optical Micro-Manipulation of Beads in Axial and Lateral Directions with Upward and Downward-Directed Laser Beams," LEOS'99 (IEEE Lasers and Electro-Optics Society 1999 Annual Meeting), pp. 169-170, 8-11, November 1999, San Francisco USA

### Disclosure of Invention

The above three methods, however, have the following problems described below.

As for the method (1), when a sample substance to be detected is, for example, a single molecule, the sample substance does not produce such an effect as to deflect an overall cantilever. No deflection change can be detected unless the cantilevers absorb a considerable amount of molecules. In addition, since this method is intended to detect quasi-static deflection, it is difficult to be distinguished from drifts of temperature variations for example.

As for the method (2), sensitive detection is hardly achieved in an environment where measurement must be performed in liquid, such as measurements of bio-related substances, because the liquid attenuates oscillation of the cantilevers.

As for the method (3), a large number of gaps are hardly defined accurately. In particular, there are extremely limited options for modifying both ends of the gaps, and thus mechanical, electrical, and optical measurements are hardly performed.

In light of the circumstances described above, an object of the present invention is to provide a nanogap array method and device capable of trapping, detecting, and identifying a substance with high sensitivity even if the substance to be detected is molecules contained in liquid.

To achieve the above object, the present invention is characterized by the following.
[1] A nanogap array method for trapping, detecting, and identifying a substance includes steps of providing a cantilever array including cantilevers each having a probe; providing a substrate having modified surfaces arranged so as to correspond to the probe of each cantilever below the cantilever array; and trapping, detecting, and identifying at least one unknown substance in nanometer-sized gaps defined between the modified surfaces of the substrate and tips of the probes of the cantilevers.
[2] According to the nanogap array method for trapping, detecting, and identifying a substance described above in [1], the length of the gaps between the modified surfaces of the substrate and the tips of the probes of the cantilevers is known.
[3] According to the nanogap array method for trapping, detecting, and identifying a substance described above in [2], the length of the gaps is uniformly defined.
[4] According to the nanogap array method for trapping, detecting, and identifying a substance described above in [2], the gaps have a gradient in length.
[5] According to the nanogap array method for trapping, detecting, and identifying a substance described above in [1] or [2] above, the substance is contained in liquid.
[6] According to the nanogap array method for trapping, detecting, and identifying a substance described above in [1], [2] or [5], the substance is at least one molecule.
[7] According to the nanogap array method for trapping, detecting, and identifying a substance described above in [6], the molecule is a single molecule.
[8] According to the nanogap array method for trapping, detecting, and identifying a substance described above in [1], [2] or [5], the substance is protein.
[9] According to the nanogap array method for trapping, detecting, and identifying a substance described above in [1], [2] or [5], the substance is a biological substance.
[10] According to the nanogap array method for trapping, detecting, and identifying a substance described above in any one of [1] to [9] further includes a step of modifying the tips of the probes of the cantilevers in advance in order to trap a particular substance.
[11] According to the nanogap array method for trapping, detecting, and identifying a substance described above in any one of [1] to [10], light transmission probes are used to introduce light from the cantilevers to the tips of the probes so as to concentrate the field of the light in the nanogaps so that a nearby target substance is trapped in the gaps via the gradient of the light.
[12] Another nanogap array method for trapping, detecting, and identifying a substance includes steps of irradiating rear surface of a substrate with primary incident laser light such that the laser light is incident on a target substance near gaps at an angle shallower than a critical angle to cause evanescent field excitation; and trapping the nearby target substance in the gaps via the gradient of the field of propagating light generated from tips of probes placed in the evanescent field.
[13] A nanogap array device for trapping, detecting, and identifying a substance includes a cantilever array including cantilevers each having a probe; and a substrate disposed below the cantilever array, having modified surfaces arranged so as to correspond to the probe of each cantilever. Nanometer-sized gaps are defined between the modified surfaces of the substrate and tips of the probes of the cantilevers to trap, detect, and identify at least one unknown substance between the gaps.
[14] According to the nanogap array device for trapping, detecting, and identifying a substance described above in [13], the probes of the cantilevers are modified.
[15] According to the nanogap array device for trapping, detecting, and identifying a substance described above in [13], the trapped substance is identified by oscillating the cantilevers to detect mass change or damping change of the cantilevers due to trapping of the substance as change in vibrational frequency or change in oscillation amplitude.
[16] According to the nanogap array device for trapping, detecting, and identifying a substance described above in [13] further includes a laser Doppler interferometer having an optical excitation function so as to detect and identify properties of the trapped substance.
[17] According to the nanogap array device for trapping, detecting, and identifying a substance described above in [13], the cantilever array and a support member supporting the cantilever array are formed of a transparent substrate, and the properties of the trapped substance is detected and identified by measuring displacement or amplitude or frequency of the cantilevers by an optical interference method using intervals defined by the cantilevers and the member.
[18] Another nanogap array device for trapping, detecting, and identifying a substance includes a cantilever array including cantilevers each having a probe; and a circular substrate disposed below the cantilever array and having annular grooves to be supplied with at least one unknown substance for being provided on modified surfaces. Nanometer-sized gaps are defined between the modified surfaces of the substrate and tips of the probes of the cantilevers to trap, detect, and identify the unknown substance.
[19] According to the nanogap array device for trapping, detecting, and identifying a substance described above in [18], different substances are provided in the different annular grooves and are simultaneously trapped, detected, and identified.
[20] Another nanogap array device for trapping, detecting, and identifying a substance includes a transparent substrate on which samples are provided; cantilevers having probes and defining an array of nanogaps corresponding to the samples on the transparent substrate; and at least one substance to be trapped between the probes of the cantilevers and the transparent substrate. The substance is trapped in the nanogaps by irradiating rear surface of the transparent substrate with primary incident laser light to perform optical measurement.
[21] According to the nanogap array device for trapping, detecting, and identifying a substance described above in [20], the primary incident laser light is incident at a position where the substance is disposed at an angle shallower than a critical angle to cause evanescent field excitation.
[22] According to the nanogap array device for trapping, detecting, and identifying a substance described above in [20] or [21], the samples are sequentially irradiated and scanned with the primary incident laser light.
[23] According to the nanogap array device for trapping, detecting, and identifying a substance described above in any one of [20] to [22], the transparent substrate is a circular substrate, and the cantilevers having probes are arranged in a radial direction of the transparent substrate.
[24] According to the nanogap array device for trapping, detecting, and identifying a substance described above in any one of [20] to [23], the transparent substrate has annular grooves to be supplied with the substance.
[25] According to the nanogap array device for trapping, detecting, and identifying a substance described above in [24], different substances are provided in the different annular grooves and are simultaneously trapped, detected, and identified.

### Brief Description of the Drawings

Fig. 1 is a schematic diagram of a nanogap array device for trapping, detecting, and identifying molecules according to a first embodiment of the present invention.
Fig. 2 is an enlarged view of part A of Fig. 1.
Fig. 3 is an enlarged view of part A according to a modification of the first embodiment.
Fig. 4 is a plan view of a nanogap array device for trapping, detecting, and identifying molecules according to a second embodiment of the present invention.
Fig. 5 is a sectional view of Fig. 4 along the line B-B.
Fig. 6 is a schematic diagram of a nanogap array device for trapping, detecting, and identifying molecules according to a third embodiment of the present invention.
Fig. 7 is an enlarged view of part C of Fig. 6.
Fig. 8 is a schematic diagram of a molecule measurement apparatus including a laser Doppler interferometer having a function of optically exciting molecules according to the present invention.
Fig. 9 is a schematic diagram showing trapping of molecules by a nanogap array according to the present invention and an optical system focused on the nanogap array for optical measurements.

### Best Mode for Carrying Out the Invention

A nanogap array device for trapping, detecting, and identifying molecules according to the present invention includes a cantilever array having cantilevers arranged in line each having a probe; a substrate disposed below the cantilever array and having a modified surface arranged so as to correspond to the location of the probe of each cantilever; and nanometer-sized gaps defined between the modified surfaces of the substrate and tips of the probes of the cantilevers to trap, detect, and identify at least one unknown substance. This device allows detection of single molecules, which are hardly achieved by known cantilever material sensors.

In addition, many different substances are detected by one to millions of gaps of known lengths. Control of nanogaps in a plane, which is hard to do in general, can be easily achieved using the cantilever array and the substrate. Furthermore, a wide variety of options for modifying both ends of the gaps are offered to accurately detect and identify many different substances.

### Embodiments

Embodiments of the present invention are now described in detail.

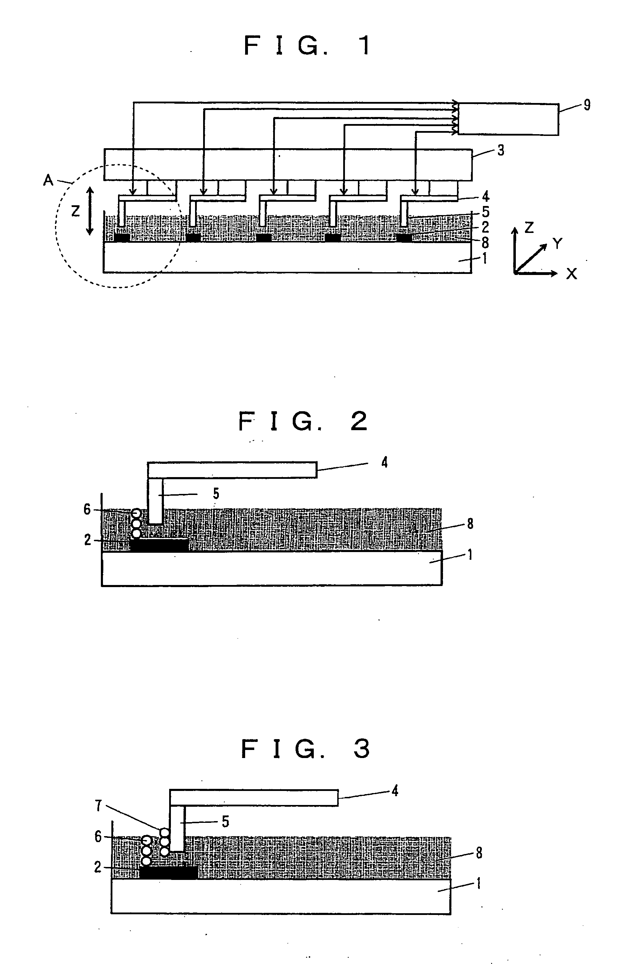

Fig. 1 is a schematic diagram of a nanogap array device for trapping, detecting, and identifying molecules according to a first embodiment of the present invention. Fig. 2 is an enlarged view of part A of Fig. 1.

Figs. 1 and 2 show a flat substrate 1, modified surfaces 2 disposed at predetermined positions on the substrate 1, a cantilever array 3 including cantilevers 4 having probes 5 at leading ends thereof, molecules 6 provided on the modified surfaces 2 as an unknown substance (such as a protein or a biofunctional substance), a liquid 8, and a measuring apparatus 9. Definition of the term "unknown substance" here includes known substances of unknown concentrations.

Fig. 3 is an enlarged view of part A of a nanogap array device for trapping, detecting, and identifying molecules according to a modification of this embodiment. In this modification, a modifier 7 for trapping a particular substance is provided on each probe 5 in advance (for example, a protein or a biofunctional substance is applied).

In this embodiment, the cantilevers 4 of the cantilever array 3 are brought closer to the flat substrate 1 in a direction normal thereto, which is defined as a Z-axis, while displacements or variations in the frequencies of the individual cantilevers 4 are detected. The Z-axis coordinate of the cantilever array 3 at the time when the probes 5 come into contact with the flat substrate 1 is detected by a known method of interaction detection using an atomic force microscope (AFM). After the probes 5 of the cantilevers 4 come into contact with the flat substrate 1, the cantilever array 3 is moved back in the Z-axis direction. The distance (gap length) between the probes 5 of the cantilevers 4 and the flat substrate 1 after the backward movement is known because the Z-axis coordinate has been measured at the time when the probes 5 of the cantilevers 4 come into contact with the flat substrate 1.

This technique can define a gap array of known gap length even if the probes 5 are unequal in height or the cantilevers are initially deflected. A gap array on the order of subangstroms to several nanometers in gap length can be achieved by preparing a sufficient number of gaps even if deflections of the cantilevers 4 or variations in height of the probes 5 on the order of tens of nanometers occur as general possible errors.

This technique can provide a variety of gap lengths because a nanogap array including millions of gaps per square centimeter can be prepared with the expectation that the cantilevers 4 have variations on the order of tens of nanometers after processing. That is, the variations in gap length are preferred in a certain sense. If no variations in gap length are left after manufacturing, a gap array with varying gap lengths caused by a substrate or cantilevers purposely having a gradient must be prepared.

The substrate-cantilever distance may also be uniformly defined.

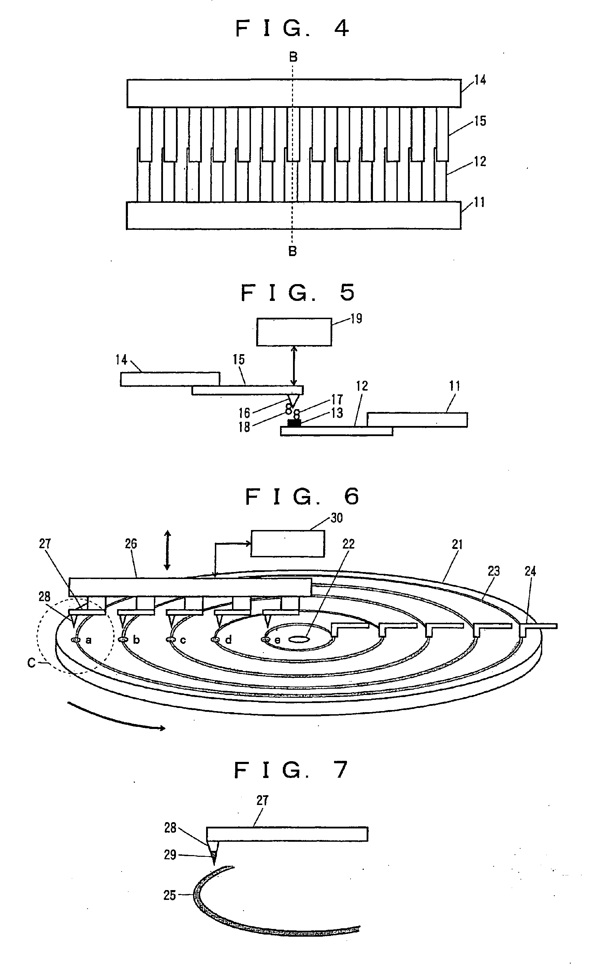

Fig. 4 is a plan view of a nanogap array device for trapping, detecting, and identifying molecules according to a second embodiment of the present invention. Fig. 5 is a sectional view of Fig. 4 along the line B-B.

Figs. 4 and 5 show a substrate 11 on which comb-like protrusions 12 are formed, modified surfaces 13 provided on the protrusions 12, a cantilever array 14 including comb-like cantilevers 15 having probes 16 provided at leading ends thereof, and a measuring apparatus 19. Molecules 17 are provided on the modified surfaces 13, and molecules 18 are provided on the probes 16 of the comb-like cantilevers 15.

This nanogap array device for trapping, detecting, and identifying molecules defines an array of gaps of known gap length on the order of nanometers to trap, detect, and identify a substance with the gaps. The gaps are defined between the substrate 11 on which the protrusions 12 are formed and the cantilever array 14.

For example, trapping is performed between the molecules 17 provided on the modified surface 13 and the modifier 18 for trapping a particular substance provided in advance on the probes 16 of the cantilevers 15 and then detection and identification are performed by the measuring apparatus 19.

Additionally, in nanogap array devices for trapping, detecting, and identifying molecules according to the present invention, a cantilever array and its support member can be transparent members. The properties of a trapped substance can be detected and identified by measuring the displacement or amplitude or frequency of vibration of the cantilevers using intervals defined by the cantilevers and the member by an optical interference method.

Fig. 6 is a schematic diagram of a nanogap array device for trapping, detecting, and identifying molecules according to a third embodiment of the present invention. Fig. 7 is an enlarged view of part C of Fig. 6.

Figs. 6 and 7 show a flat, circular substrate 21, annular grooves 23 formed around a central part 22 of the circular substrate 21, nozzles 24 for supplying a liquid 25 containing molecules, a cantilever array 26 including cantilevers 27 having probes 28 provided at the leading ends thereof, molecules 29 applied to the probes 28, and a measuring apparatus 30.

The nanogap array device according to this embodiment traps, for example, molecules contained in blood samples a to e supplied to the annular grooves 23, as the liquid 25, using the molecules 29 applied to the probes 28 and then detects and identifies the trapped molecules using the measuring apparatus 30.

In addition, as described above, both ends of gaps between cantilevers and a substrate are preferably modified in advance so as to trap a particular substance. The trapping of a substance can be detected by vibrational frequency change of the cantilevers or by change in bending hysteresis (generally referred to as a force curve) due to positional modulation of the cantilever array in the Z-axis direction. That is, measurements by a measurement apparatus can be performed by oscillating cantilevers to detect mass change of cantilevers due to trapping substance or damping change of cantilevers after oscillation of the cantilevers as change in vibrational frequency or change in oscillation amplitude. In particular, a sample measurement apparatus using a laser Doppler interferometer having a function of optically exciting samples (described below) or a scanning force microscope, material sensor, or mass sensor using a heterodyne laser Doppler interferometer, all of which are developed by the present inventor et al., can be used.

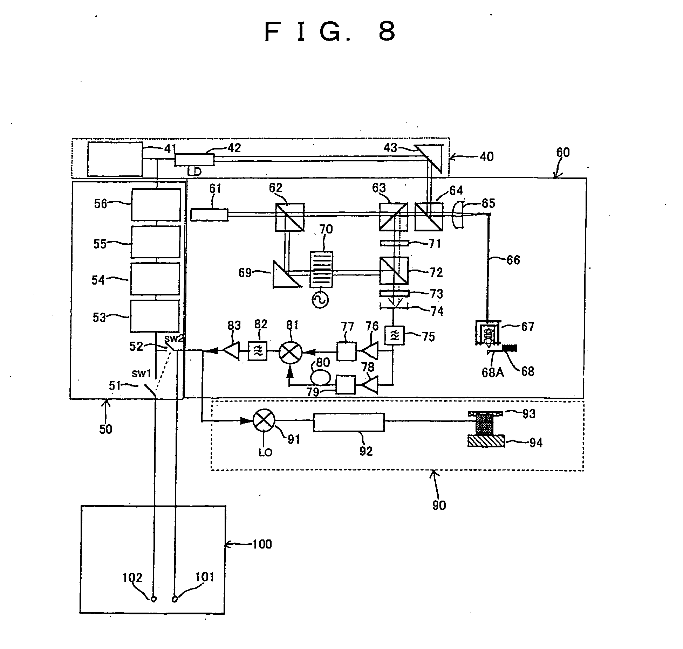

Fig. 8 is a schematic diagram of a molecule measurement apparatus using a laser Doppler interferometer having the function of optically exciting molecules according to the present invention.

In Fig. 8, the apparatus for measuring the properties of sample molecules according to this embodiment includes an optical excitation part 40, a signal-processing part 50, a laser Doppler interferometer part 60, an atomic force microscopy (AFM) sample stage control part 90, and a network analyzer 100.

The optical excitation part 40 includes a laser diode (LD) driver 41, a laser diode (LD) 42 that is driven by the LD driver 41, and a mirror 43.

The signal-processing part 50 includes a first switch (sw1) 51, a second switch (sw2) 52, a digitizer 53, a phase shifter 54, a filter 55, and an amplifier 56.

The laser Doppler interferometer part 60 includes a He-Ne laser 61, a first polarizing beam splitter (PBS) 62, a second PBS 63, a multiplexer 64, a lens 65, a polarization-maintaining fiber 66, a sensor head (laser output part) 67 (an assembly of two lenses and a λ/4 wave plate disposed therebetween), nanocantilevers 68, probes 68A, a mirror 69, an acousto-optic modulator (AOM) 70, a λ/2 wave plate 71, a third PBS 72, a polarizer 73, a photodiode 74, a bandpass filter (BPF) 75, amplifiers 76, 78, and 83, digitizers 77 and 79, a delay line 80, a double-balanced mixer (DBM) 81, and a low-pass filter (LPF) 82.

The AFM sample stage control part 90 includes a DBM 91 connected to a local oscillator (LO), a controller 92, sample molecules 93, and a piezoelectric element 94.

The network analyzer 100 includes a signal input terminal 101 and an evaluation output terminal 102.

In this embodiment, for example, 780-nm-wavelength light output from the laser diode (LD) 61 is superimposed onto 632-nm-wavelength measurement light emitted from the He-Ne (helium-neon) laser 41 of the laser Doppler interferometer part, although the wavelengths used are not limited to the examples above. The superimposed light is introduced into the polarization-maintaining fiber 66, which includes a 4 µm core, to irradiate on the sample molecules 93 via the laser output part 67 and the nanocantilevers 68.

This measuring apparatus can be used as follows:
(1) Signals output from the laser Doppler interferometer part 60 are phase-shifted, amplified, and, if necessary, filtered and digitized. These signals are used to modulate the 780-nm-wavelength light emitted from the laser diode 42 so that the sample molecules 93 can be self-excited at the natural frequency thereof. That is, the sample molecules 93 can be excited in a particular oscillation mode by selecting filtering properties. This allows the self-excitation of nanometer- to micrometer-sized sample molecules.
   The nanocantilevers 68, which serve as force detectors for scanning probe microscopes, can be self-excited by light irradiation. Change in self-excitation frequency can then be measured to detect the interaction between the probes 68A provided at the leading ends of the nanocantilevers 68 and the sample molecules 93 and mass change.
(2) Frequency sweep signals generated from the network analyzer 100 are used to modulate the 780-nm-wavelength light emitted from the laser diode 42. Signals output from the laser Doppler interferometer part 60 are fed to the signal input terminal 101 of the network analyzer 100. This allows measurements of the frequency properties of the sample molecules 93 using the network analyzer 100 and the laser Doppler interferometer part 60, which has an optical excitation function.

The measurement light and the oscillated (vibration) exciting light may be superimposed in the same optical system or may be allowed to irradiate the sample molecules 93 via different optical paths.

The light emitted from the LD 42 is superimposed onto the optical measurement probe light emitted from the He-Ne laser 61 of the laser Doppler interferometer part 60 to excite the vibration of the nanocantilevers 68. The excitation light used is light emitted from a light source such as the LD 42 and modulated using speed signals output from the laser Doppler interferometer part 60 and processed by, for example, phase shifting, digitization, and amplification, or is light modulated at a frequency specified by an oscillator or sweep frequencies.

As described above, oscillation specific to the object under measurement can be excited in measurements using a laser Doppler interferometer. A substance, particularly single molecules, can thus be trapped, detected, and identified using a cantilever array with high accuracy.

The present invention thus allows detection of single molecules in liquid, which are difficult to detect by known methods based on static bending of cantilevers or change in vibrational thereof, and also allows mechanical-and electrical measurements of single molecules. In addition, a particular substance can be selectively trapped by modifying both ends of gaps defined between probes and a substrate.

The present inventor has so far realized a cantilever array having several millions of probes per square centimeter (see Patent Document 2 above). This cantilever array can be used to realize a nanogap array including a large number of gaps of known gap length.

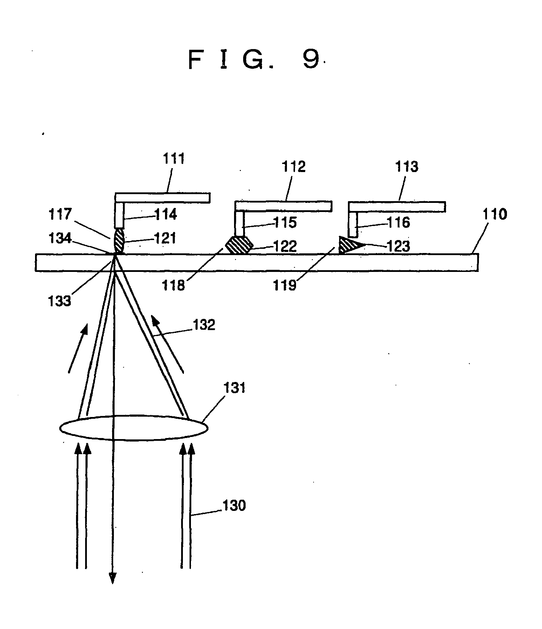

Fig. 9 is a schematic diagram showing trapping of molecules by a nanogap array according to the present invention and an optical system focused on the nanogap array for optical measurements.

Fig. 9 shows a transparent substrate 110, cantilevers 111, 112, and 113 defining a nanogap array, probes 114, 115, and 116 of the cantilevers 111, 112, and 113, respectively, trapped molecules 117, 118, and 119, nanogaps 121, 122, and 123, primary incident laser light 130, a focusing lens 131, laser light 132 incident at an angle shallower than a critical angle, a laser spot 133, and evanescent field excitation 134. A probe tip is placed in an evanescent field to generate propagating light. A nearby target to be trapped can then be trapped in a gap via the gradient of the field of the propagating light.

As shown in Fig. 9, both optical measurements and the trapping of molecules with nanogaps can be performed. A detailed description will be given below.

Use of the optical system focused on the nanogaps 121, 122, and 123 (or an optical system that receives light propagating from nanogaps) allows measurements of the optical properties, including spectrum, intensity, and polarization, of substances such as the molecule 117 trapped in the nanogap 121 and a protein.

The optical system used here is based on, for example, the principle of confocal microscopy. Optical information can be measured for each nanogap by sequentially scanning particular three-dimensional regions where light is to be focused (scanning the nanogaps 121, 122, and 123 with the laser spot 133). For example, molecules labeled with a particular fluorescent substance can be trapped in nanogaps for optical spectrum measurement in addition to force and electrical measurements.

Transparent probes may also be used to introduce light from cantilevers to tips of the probes and concentrate the field of the light in nanogaps so that a nearby target substance to be trapped can be trapped in the gaps via the gradient of the light.

A target substance (substance to be detected) fed to grooves on a rotating circular substrate as shown in Figs. 6 and 7 and transferred to nanogaps can be reliably trapped in the nanogaps and subjected to measurements by using a transparent substrate or simultaneously performing optical measurements from above the cantilevers.

Compared with surface plasmon measurement, which has become increasingly popular, the method described above has many advantages in terms of sensitivity and resistance to background noise. In this method, positions for optical measurements can be limited in advance because molecules are trapped in three-dimensionally limited spots, namely, nanogaps. This method can reduce the amount of sample required and allows detection of a trace amount of substance from a trace amount of sample. For example, this method is expected to markedly reduce the amount of blood required for blood tests at hospitals.

In addition, the nanogap array device and method for trapping, detecting, and identifying molecules according to the present invention allow the trapping of proteins and biological substances. Thus, the present invention contributes to the trapping, detection, and identification of substances in the field of molecular biology. That is, the device and method according to the present invention can serve as an important tool for understanding biological phenomena at the molecular level. For example, some cell membrane proteins are involved in the adhesion of cells. In mitochondria, which serve as energy producers, a large amount of energy (APT) is produced by the tricarboxylic acid (TCA) cycle. The device and method according to the present invention is also effective in trapping, detecting, and identifying APT.

The present invention thus provides the following advantages:
(1) Detection resolutions on the order of single molecules can be achieved.
(2) An array of subnanometer- to nanometer-sized gaps can be easily achieved.
(3) A wider range of options for modifying both ends of gaps between probes and a substrate is available.
(4) Trapping of nanometer-sized substances and measurements of the properties thereof are facilitated. In particular, trapping of many different substances by a cantilever array and incident laser light and measurements of the properties thereof by scanning with the incident laser light can be easily performed with high accuracy.

The present invention is not limited to the embodiments described above; various modifications are permitted within the spirit of the invention and are not excluded from the scope of the invention.

### Industrial Applicability

The nanogap array device and method for trapping, detecting, and identifying molecules according to the present invention can be used for detection of proteins and biofunctional substances and development of new drugs.

## Claims

1. A nanogap array method for trapping, detecting, and identifying a substance, the method comprising the steps of providing a cantilever array including cantilevers each having a probe; providing a substrate below the cantilever array, the substrate having modified surfaces arranged so as to correspond to the probe of each cantilever; and trapping, detecting, and identifying at least one unknown substance in nanometer-sized gaps defined between the modified surfaces of the substrate and tips of the probes of the cantilevers.

2. The nanogap array method for trapping, detecting, and identifying a substance according to Claim 1, wherein the length of the gaps between the modified surfaces of the substrate and the tips of the probes of the cantilevers is known.

3. The nanogap array method for trapping, detecting, and identifying a substance according to Claim 2, wherein the length of the gaps is uniformly defined.

4. The nanogap array method for trapping, detecting, and identifying a substance according to Claim 2, wherein the gaps have a gradient in length.

5. The nanogap array method for trapping, detecting, and identifying a substance according to Claim 1 or 2, wherein the substance is contained in a liquid.

6. The nanogap array method for trapping, detecting, and identifying a substance according to Claim 1, 2, or 5, wherein the substance is at least one molecule.

7. The nanogap array method for trapping, detecting, and identifying a substance according to Claim 6, wherein the molecule is a single molecule.

8. The nanogap array method for trapping, detecting, and identifying a substance according to Claim 1, 2, or 5, wherein the substance is protein.

9. The nanogap array method for trapping, detecting, and identifying a substance according to Claim 1, 2, or 5, wherein the substance is a biological substance.

10. The nanogap array method for trapping, detecting, and identifying a substance according to any one of Claims 1 to 9, further comprising a step of modifying the tips of the probes of the cantilevers in advance in order to trap a particular substance.

11. The nanogap array method for trapping, detecting, and identifying a substance according to any one of Claims 1 to 10, wherein light transmission probes are used to introduce light from the cantilevers to the tips of the probes so as to concentrate the field of the light in the nanogaps so that a nearby target substance is trapped in the gaps via the gradient of the light.

12. A nanogap array method for trapping, detecting, and identifying a substance, comprising steps of irradiating the rear surface of a substrate with primary incident laser light such that the laser light is incident on a target substance near gaps at an angle shallower than a critical angle to cause evanescent field excitation; and trapping the nearby target substance in the gaps via the gradient of the field of propagating light generated from tips of probes placed in the evanescent field.

13. A nanogap array device for trapping, detecting, and identifying a substance, comprising:
(a) a cantilever array including cantilevers each having a probe; and
(b) a substrate disposed below the cantilever array, having modified surfaces arranged so as to correspond to the probe of each cantilever;
wherein (c) nanometer-sized gaps are defined between the modified surfaces of the substrate and tips of the probes of the cantilevers to trap, detect, and identify at least one unknown substance between the gaps.

14. The nanogap array device for trapping, detecting, and identifying a substance according to Claim 13, wherein the probes of the cantilevers are modified.

15. The nanogap array device for trapping, detecting, and identifying a substance according to Claim 13, wherein the trapped substance is identified by oscillating the cantilevers to detect mass change or damping change of the cantilevers due to trapping of the substance as change in vibrational frequency or change in oscillation amplitude.

16. The nanogap array device for trapping, detecting, and identifying a substance according to Claim 13, further comprising a laser Doppler interferometer having an optical excitation function so as to detect and identify properties of the trapped substance.

17. The nanogap array device for trapping, detecting, and identifying a substance according to Claim 13, wherein the cantilever array and a support member supporting the cantilever array comprise a transparent substrate, and the properties of the trapped substance is detected and identified by measuring displacement or amplitude or frequency of the cantilevers by an optical interference method using intervals defined by the cantilevers and the member.

18. A nanogap array device for trapping, detecting, and identifying a substance, comprising:
(a) a cantilever array including cantilevers each having a probe; and
(b) a circular substrate disposed below the cantilever array, having annular grooves to be supplied with at least one unknown substance for being provided on modified surfaces;
wherein (c) nanometer-sized gaps are defined between the modified surfaces of the substrate and tips of the probes of the cantilevers to trap, detect, and identify the unknown substance.

19. The nanogap array device for trapping, detecting, and identifying a substance according to Claim 18, wherein different substances are provided in the different annular grooves and are simultaneously trapped, detected, and identified.

20. A nanogap array device for trapping, detecting, and identifying a substance, comprising:
(a) a transparent substrate on which samples are provided;
(b) cantilevers having probes, defining an array of nanogaps corresponding to the samples on the transparent substrate; and
(c) at least one substance to be trapped between the probes of the cantilevers and the transparent substrate;
wherein (d) the substance is trapped in the nanogaps by irradiating rear surface of the transparent substrate with primary incident laser light to perform optical measurement.

21. The nanogap array device for trapping, detecting, and identifying a substance according to Claim 20, wherein the primary incident laser light is incident at a position where the substance is disposed at an angle shallower larger than a critical angle to cause evanescent field excitation.

22. The nanogap array device for trapping, detecting, and identifying a substance according to Claim 20 or 21, wherein the samples are sequentially irradiated and scanned with the primary incident laser light.

23. The nanogap array device for trapping, detecting, and identifying a substance according to any one of Claims 20 to 22, wherein the transparent substrate is a circular substrate, and the cantilevers having probes are arranged in a radial direction of the transparent substrate.

24. The nanogap array device for trapping, detecting, and identifying a substance according to any one of Claims 20 to 23, wherein the transparent substrate has annular grooves to be supplied with the substance.

25. The nanogap array device for trapping, detecting, and identifying a substance according to Claim 24, wherein different substances are provided in the different annular grooves and are simultaneously trapped, detected, and identified.
